# FASCICULE DE BREVET EUROPEEN

(11) **EP 1 556 306 B1**
(45) Date de publication et mention de la délivrance du brevet: **13.09.2006**
(21) Numéro de dépôt: 03778432.9
(22) Date de dépôt: 21.10.2003
(51) Int. Cl.: B66F 9/19, B60P 1/52

(54) **DISPOSITIF A ROULEMENTS POUR DEPLACER UNE CHARGE DANS UN PLAN SENSIBLEMENT HORIZONTAL**
ROLLENBAHNVORRICHTUNG ZUM BEWEGEN EINER LAST IN EINER IM WESENTLICHEN HORIZONTALEN EBENE
ROLLER TRACK DEVICE FOR MOVING A LOAD IN A SUBSTANTIALLY HORIZONTAL PLANE

(30) Priorité: 21.10.2002 FR 0213075
(43) Date de publication de la demande: 27.07.2005
(73) Titulaire: Rotobloc Sarl, 25480 Pirey (FR)
(72) Inventeur: MARCELLI, Pierre, F-25660 Laveze (FR)
(74) Mandataire: Nithardt, Roland
(86) Numéro de dépôt international: PCT/FR2003/003127
(87) Numéro de publication internationale: WO 2004/037704

(56) Documents cités:
- DE-A- 3 620 964
- NL-C- 1 014 147
- US-A- 3 243 029
- US-A- 4 930 612

## Description

La présente invention concerne un dispositif à roulements pour déplacer une charge dans un plan sensiblement horizontal entre un appareil de manutention et une machine, ce dispositif étant destiné à équiper les fourches dudit appareil de manutention et comportant au moins un rail définissant au moins une surface d'appui plane apte à porter ladite charge quand elle est statique, ce rail étant creux sensiblement horizontal et pourvu d'une ouverture longitudinale, au moins un contre-rail logé dans ledit rail et dans lequel sont montés des organes de roulement en regard de ladite ouverture longitudinale, ces organes de roulement étant compris dans un plan sensiblement parallèle à ladite surface et aptes à porter ladite charge quand elle est en mouvement, au moins une des structures étant couplée à des moyens d'actionnement pour être mobile par rapport à l'autre entre au moins une position basse et une position haute, dans lesquelles la charge est portée soit par le rail, soit par le contre-rail, ces moyens d'actionnement étant agencés pour déplacer la structure dite mobile au moins en translation horizontale, des moyens d'élévation étant disposés entre les deux structures de manière à générer un déplacement vertical de la structure dite mobile simultanément à son déplacement horizontal. La présente invention concerne également un appareil de manutention à fourches équipé d'un tel dispositif à roulements. Un tel dispositif est montré dans le document US-A-4 930 612.

Dans l'industrie, on utilise de manière courante des appareils de manutention, tels que par exemple des chariots élévateurs, des gerbeurs, pour manutentionner des charges importantes. Ces charges importantes sont par exemple des outils pour des machines outils ou des presses utilisées dans le découpage ou l'emboutissage de tôles, des moules ou des matrices utilisés dans l'injection de matières synthétiques, etc. De manière générale, les charges inférieures à 2 tonnes sont transportées sur des appareils de manutention à plateau alors que les charges de 2 à 10 tonnes sont transportées sur des appareils de manutention à fourches. Au-delà de 10 tonnes, les charges sont transportées par des ponts roulants, par exemple.

Afin de pouvoir faciliter le transfert de ces charges dans le plan horizontal de l'appareil de manutention à la machine outil et inversement, les appareils de manutention du commerce sont équipés d'un dispositif à roulements intégré aux fourches et agencé pour porter la charge et la déplacer sans friction sur des organes de roulements libres. Les appareils de manutention peuvent également être équipés de bras articulés agencés pour pousser ou tirer cette charge. Le dispositif à roulements comporte généralement une "structure porte-roulements" surmontée d'une "structure porte-charge". La structure porte-charge a pour fonction de porter la charge pendant le roulage de l'appareil de manutention alors que la structure porte-roulements a pour fonction de la porter sans friction afin de pouvoir effectuer son transfert. Le passage de la charge de l'une à l'autre structure et inversement est obtenu par un déplacement relatif d'une structure par rapport à l'autre permettant d'escamoter ou de sortir les organes de roulement de la structure porte-roulements par rapport à la structure porte-charge, ce déplacement relatif étant commandé par des moyens d'actionnement manuels ou automatiques.

Dans les appareils de manutention à fourches, ce mouvement relatif est généralement commandé automatiquement soit par une butée prévue sur la machine outil et coopérant avec ladite structure mobile lors de l'accrochage des fourches, soit par un vérin intégré dans l'appareil de manutention.

Dans la publication DE-A-36 20 964, le déplacement de la structure dite mobile est généré par une butée lors de l'accrochage des fourches sur la machine outil qui provoque le soulèvement de la structure porte-roulements en la faisant pivoter autour d'un axe situé dans le tablier de l'appareil de manutention. Cette solution n'est pas satisfaisante car elle nécessite une amplitude de mouvement importante, ce qui pénalise le temps nécessaire au transfert de la charge, ainsi qu'une hauteur totale de fourche importante due à cette amplitude. De plus, la répartition de la charge n'est pas uniforme et la simultanéité des mouvements entre les structures porte-roulements n'est pas garantie, ce qui génère une fatigue et une usure prématurées du dispositif à roulements. Cette solution n'est pas non plus adaptée pour équiper des appareils de manutention déjà en service.

Dans les publications US-A-3 243 029, US-A-4 930 612 et US-A-5 915 515, le déplacement de la structure dite mobile est généré par un vérin qui soulève la structure porte-roulements par l'intermédiaire de systèmes à rampes inclinées ou à biellettes. Ces solutions ne sont pas non plus satisfaisantes car elles nécessitent une source d'énergie extérieure et spécifique pour alimenter le ou les vérins. Ces solutions sont donc complexes, coûteuses et encombrantes. De plus, elles ne sont pas conçues pour faciliter la maintenance et le nettoyage des organes de roulement, la structure porte-roulements étant difficilement démontable. Enfin, elles ne permettent pas d'équiper des appareils de manutention déjà en service.

La présente invention vise à pallier ces inconvénients en proposant un dispositif à roulements basé sur une cinématique simple, sans source d'énergie extérieure, permettant de limiter le nombre de pièces, de réduire le prix de revient de l'ensemble ainsi que son encombrement, de faciliter son entretien et son nettoyage, et d'équiper aussi bien des appareils de manutention neufs qu'en après-vente.

Dans ce but, l'invention concerne un dispositif à roulements du genre indiqué en préambule, caractérisé en ce que les moyens d'actionnement comportent au moins une butée destinée à être rapportée sur ladite machine et au moins un actionneur disposé entre les deux structures et agencé pour coopérer avec ladite butée de manière à transformer une force verticale exercée par cette butée sur ledit actionneur en une force horizontale exercée par ledit actionneur sur la structure dite mobile pour la déplacer en translation horizontale.

Dans une forme de réalisation préférée, les moyens d'élévation comportent des rampes inclinées solidaires dudit rail agencées pour coopérer avec lesdits organes de roulement dudit contre-rail. Ces rampes inclinées définissent au moins une première zone agencée pour laisser dépasser au moins le sommet des organes de roulement, une seconde zone agencée pour cacher les organes de roulement et une zone intermédiaire agencée pour former en combinaison avec les organes de roulement les rampes d'élévation. Chaque organe de roulement comporte avantageusement au moins un galet agencé pour porter la charge en position de roulement, ce galet étant monté sur un axe sensiblement horizontal entre deux rouleaux de plus petit diamètre, les rouleaux étant en contact avec les rampes inclinées.

Dans une variante de réalisation, les moyens d'élévation peuvent comporter des biellettes articulées, une de leurs extrémités étant couplée audit rail et l'autre extrémité étant couplée audit contre-rail.

Ledit actionneur peut être choisi dans le groupe comprenant au moins un levier pivotant, une genouillère, un organe rotatif, un vérin.

De préférence, le rail est fixe et le contre-rail portant les organes de roulement est mobile et coopère avec ledit actionneur, cet actionneur étant agencé pour déplacer le contre-rail de sa position basse à sa position haute lorsqu'il est en contact avec la butée et pour autoriser la descente du contre-rail par gravité lorsqu'il n'est plus en contact avec la butée.

Dans une première variante de réalisation, l'actionneur comporte au moins un levier pivotant monté sur le rail par un axe orienté dans une direction sensiblement perpendiculaire au déplacement horizontal du contre-rail, ce levier pivotant comportant au moins deux zones d'appui disposées de part et d'autre dudit axe, dont une est en contact avec le contre-rail et l'autre est destinée à coopérer avec ladite butée. Ce levier pivotant comporte au moins un galet disposé entre les deux zones d'appui et agencé pour compléter les organes de roulement du contre-rail quand il est en position haute.

Dans une deuxième variante de réalisation, l'actionneur comporte au moins un levier pivotant monté sur ledit contre-rail par un axe orienté dans une direction sensiblement perpendiculaire au déplacement horizontal de ce contre-rail, ce levier pivotant comportant au moins deux zones d'appui, dont une est en contact avec le rail et l'autre est destinée à coopérer avec ladite butée. Une des zones d'appui est de préférence constituée d'une rampe de roulement apte à coopérer avec un organe rotatif solidaire dudit rail.

Dans une troisième variante de réalisation, l'actionneur comporte au moins un organe rotatif monté sur ledit contre-rail par un axe orienté sensiblement perpendiculairement au déplacement horizontal de ce contre-rail, cet organe rotatif étant agencé pour rouler sur une rampe inclinée intégrée à ladite butée, ledit rail étant guidé en translation verticale dans cette butée par un système tenons - glissières.

Dans une quatrième variante de réalisation, l'actionneur comporte au moins une genouillère constituée d'au moins une zone d'appui disposée à l'intersection de deux bras de levier articulés et couplés respectivement audit rail et audit contre-rail selon des axes orientés sensiblement perpendiculairement au déplacement horizontal dudit contre-rail, la zone d'appui étant agencée pour coopérer avec ladite butée. Les zones d'appui sont avantageusement constituées par des organes rotatifs.

Dans une cinquième variante de réalisation, l'actionneur comporte au moins un vérin double, dont un premier piston coopère avec ledit contre-rail et est orienté sensiblement parallèlement à son déplacement horizontal et le second piston est destiné à coopérer avec ladite butée et est orienté sensiblement perpendiculairement par rapport au premier piston. Le second piston est de préférence associé à un organe de rappel. Les chambres des pistons peuvent être distinctes et reliées par au moins un conduit logé dans ledit rail.

Dans une sixième variante de réalisation, l'actionneur comporte au moins un organe rotatif monté sur le rail par un axe orienté sensiblement perpendiculairement au déplacement horizontal du contre-rail et guidé en translation dans le rail par des rainures, cet organe rotatif étant agencé pour coopérer avec deux rampes prévues respectivement sur le rail et le contre-rail, au moins une des rampes étant inclinée. Cet organe rotatif comporte au moins trois galets coaxiaux, de diamètres différents, dont deux au moins sont mobiles l'un par rapport à l'autre, ces galets étant agencés pour coopérer respectivement avec la rampe solidaire du rail, la rampe solidaire du contre-rail et la butée.

La butée est de préférence choisie parmi au moins une barre d'accroche apte à recevoir l'extrémité avant desdites fourches et une table de machine, cette butée présentant au moins une forme compatible avec ledit actionneur.

Dans ce but également, l'invention concerne un appareil de manutention à fourches du genre indiqué en préambule, caractérisé en ce qu'il comporte au moins un dispositif à roulements tel que défini ci-dessus.

La présente invention et ses avantages apparaîtront mieux dans la description suivante de plusieurs modes de réalisation donnés à titre d'exemple non limitatif, en référence aux dessins annexés, dans lesquels :
- la figure 1 est une vue en perspective d'un dispositif à roulements selon l'invention sous la forme d'une fourche,
- la figure 2 est une vue partielle en perspective du dispositif de la figure 1,
- la figure 3 est un schéma fonctionnel du dispositif de la figure 1,
- les figures 4A et4B sont des vues partielles de côté du dispositif de la figure 1 respectivement en position sortie et en position escamotée,
- la figure 5 est un schéma fonctionnel d'une première variante du dispositif selon l'invention,
- les figures 6A et 6B sont des vues partielles de côté du dispositif correspondant au schéma de la figure 5 respectivement en positions escamotée et sortie,
- les figures 7A, 7B et 7C sont des vues schématiques d'une deuxième variante du dispositif selon l'invention, respectivement une vue de côté en position escamotée, une vue de dessus et une vue de côté en position sortie,
- les figures 8A et 8B sont des vues schématiques d'une troisième variante du dispositif selon 1 invention respectivement en positions escamotée et sortie,
- les figures 9A et 9B sont des vues similaires aux figures 8A et 8B avec d'autres moyens d'élévation,
- les figures 10A, 10B et 11A, 11B sont des vues schématiques d'une quatrième et d'une cinquième variantes du dispositif selon l'invention respectivement en positions escamotée et sortie, et
- les figures 12A, 12B et 13A, 13B sont des vues schématiques d'une sixième et d'une septième variantes du dispositif selon l'invention respectivement en positions escamotée et sortie.

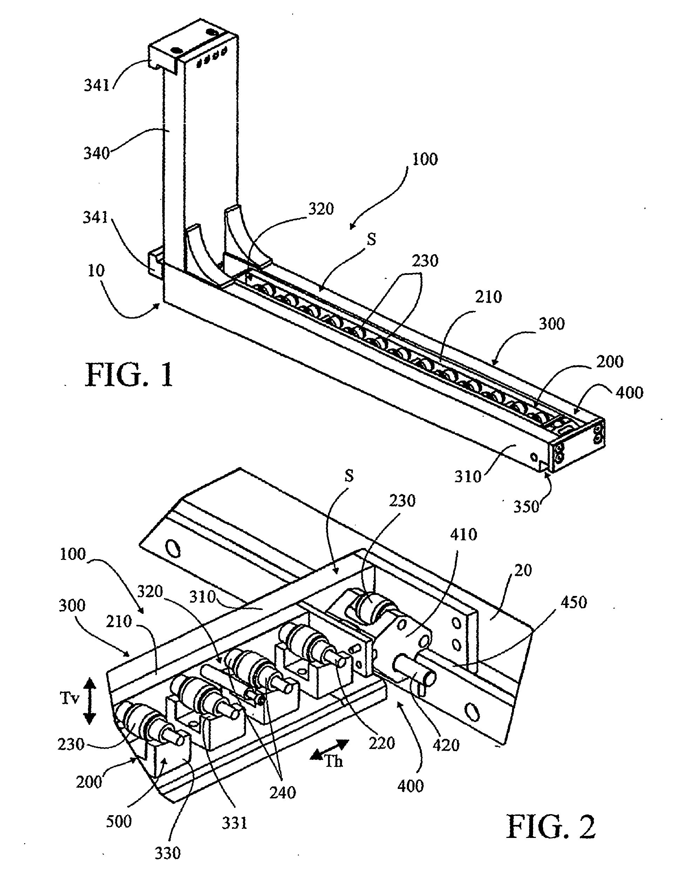

En référence aux figures 1 à 4, le dispositif à roulements 100 selon l'invention, présente une forme de fourche et est destiné à équiper un appareil de manutention classique à deux fourches parallèles (non représenté). Il assure deux fonctions : le maintien statique avec friction des charges 1 très lourdes pesant jusqu'à environ 10 tonnes pendant le roulage de l'appareil de manutention et le maintien dynamique de ces charges 1 sans friction pendant leur transfert dans un plan parallèle aux fourches à destination ou en provenance d'une machine 20 qui peut être une machine outil, une presse, une machine d'injection ou toute autre surface plane fixe ou mobile.

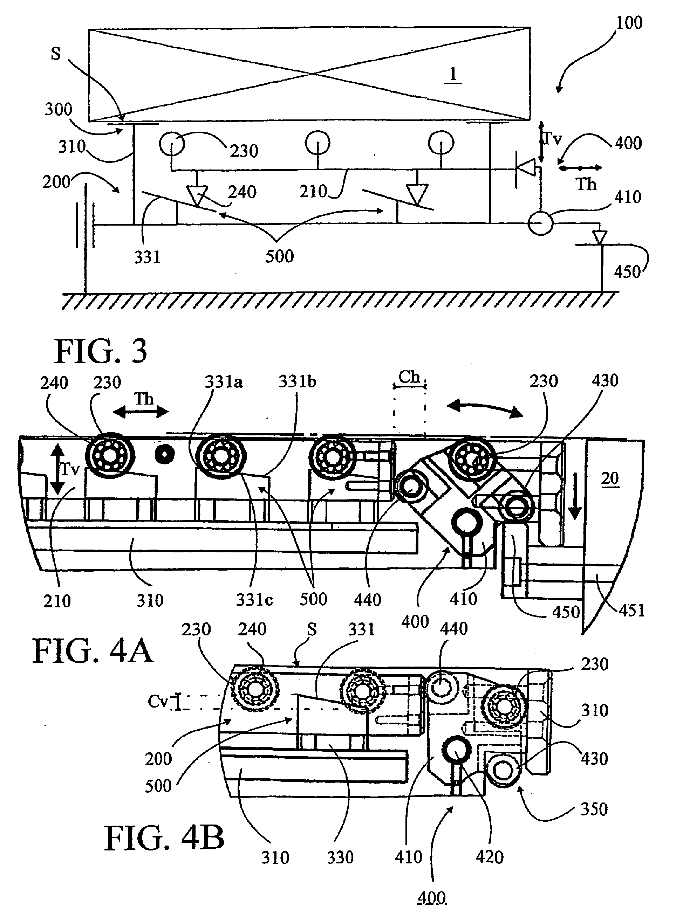

Ce dispositif à roulements 100 comporte une structure porte-roulements 200, comportant des organes de roulement 230, surmontée d'une structure porte-charge 300, présentant une surface d'appui plane S pourvue d'une ouverture 320 laissant apparaître au moins le sommet des organes de roulement 230. Dans cette réalisation et comme illustré schématiquement par la figure 3, la structure porte-roulements 200 est mobile, par rapport à la structure porte-charge 300 qui est fixe, entre deux positions dont une au moins est stable : une position basse dans laquelle elle escamote les organes de roulements 230, la charge 1 étant en appui plan sur la surface S de la structure porte-charge 300, et une position haute dans laquelle elle sort le sommet des organes de roulement 230, la charge 1 étant en appui ponctuel ou linéaire sur ces organes de roulement 230. Bien entendu, la configuration inverse est également envisageable, c'est-à-dire la structure porte-charge 300 mobile par rapport à la structure porte-roulements 200.

La structure porte-roulements 200 est couplée à des moyens d'actionnement 400 agencés pour la déplacer en translation horizontale Th d'une course Ch et à des moyens d'élévation 500 agencés pour la déplacer en translation verticale Tv d'une course Cv simultanément à son déplacement horizontal Th, la course Cv étant inférieure à la course Ch. L'originalité du dispositif à roulements 100 de l'invention réside dans le fait que les moyens d'actionnement 400 sont mécaniques et automatiques, intégrés au dispositif à roulement 100, n'occupant qu'un encombrement réduit et ne nécessitant aucun apport d'énergie. L'autre originalité réside dans les moyens d'élévation 500 qui ne sont pas constitués par des mécanismes rapportés, coûteux et complexes, mais sont directement intégrés dans les structures porte-charge 300 et porte-roulements 200. Ils résultent notamment d'un contact roulant entre des pièces 330, 240 prévues respectivement sur les structures porte-charge 300 et porte-roulements 200, ces pièces 330, 240 ayant des profils spécifiquement choisis pour former une rampe d'élévation comme expliqué plus loin.

Dans l'exemple représenté, la structure porte-charge 300 est constituée d'un rail 310 creux en U, destiné à être utilisé en position horizontale, définissant une ouverture longitudinale 320 en partie supérieure et un logement intérieur pour recevoir la structure porte-roulements 200. Ce rail 310 comporte, à son extrémité arrière, un support 340 vertical pour former une fourche 10, ce support étant pourvu de mors 341 permettant de monter cette fourche 10 en lieu et place d'une des fourches existantes d'un appareil de manutention standard. A son extrémité avant, ce rail 310 comporte une encoche 350 inférieure apte à s'emboîter sur une barre d'accroche 450 d'une machine 20 par exemple. Dans ce rail 310 sont montés des plots 330 pourvus de rampes inclinées 331, chaque plot 330 comportant deux rampes inclinées 331 parallèles. Ces rampes inclinées 331 définissent au moins une première zone 331a agencée pour laisser dépasser au moins le sommet des organes de roulement 230, une seconde zone 331b agencée pour cacher les organes de roulement 230 et une zone intermédiaire 331c agencée pour former en combinaison avec les organes de roulement 230 les moyens d'élévation 500.

La structure porte-roulements 200 est constituée d'un contre-rail 210 ouvert de part en part, et présentant des dimensions complémentaires à celles du logement intérieur du rail 310 de manière à être mobile librement à l'intérieur de ce rail 310 en translation horizontale Th et en translation verticale Tv. Ce contre-rail 210 est guidé dans le rail 310 par leurs flancs latéraux respectifs. Il comporte une pluralité de galets 230 alignés sur son axe médian, dans un plan parallèle à la surface d'appui plan S du rail 310, ces galets 230 étant sensiblement cylindriques et constituant les organes de roulement. Chaque galet 230 est monté fou sur un axe transversal 220 solidaire du contre-rail 210. Chaque axe transversal 220 porte également deux rouleaux 240 disposés de part et d'autre du galet 230, présentant un diamètre inférieur à celui dudit galet 230 et positionnés en regard et au contact des rampes 331 d'un plot 330.

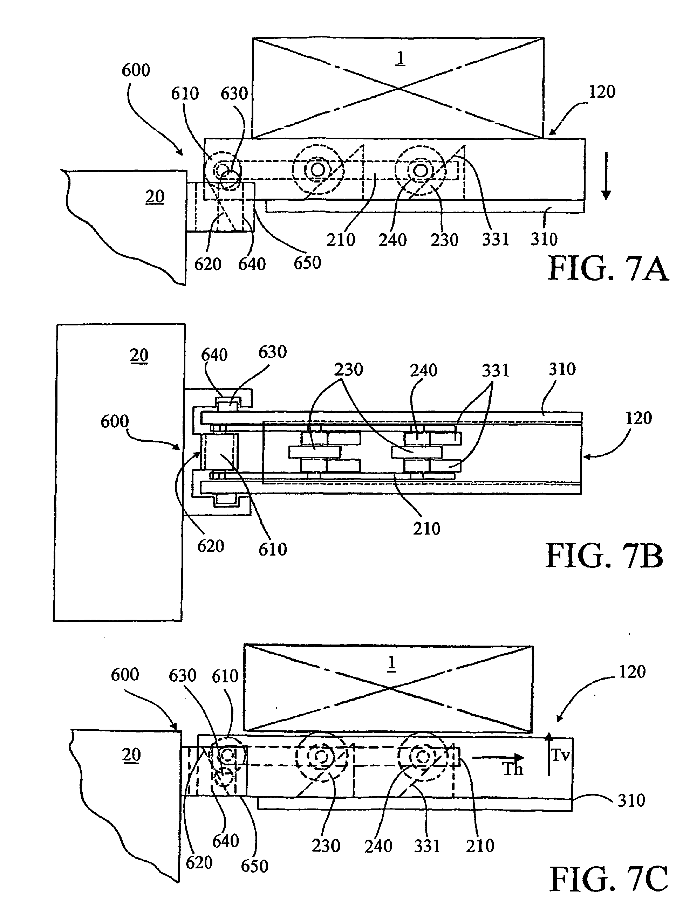

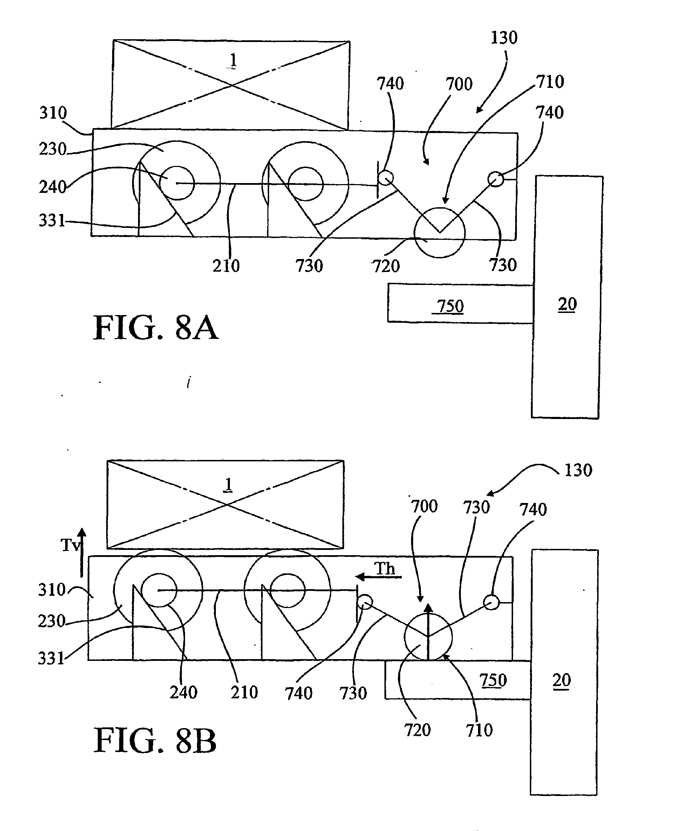

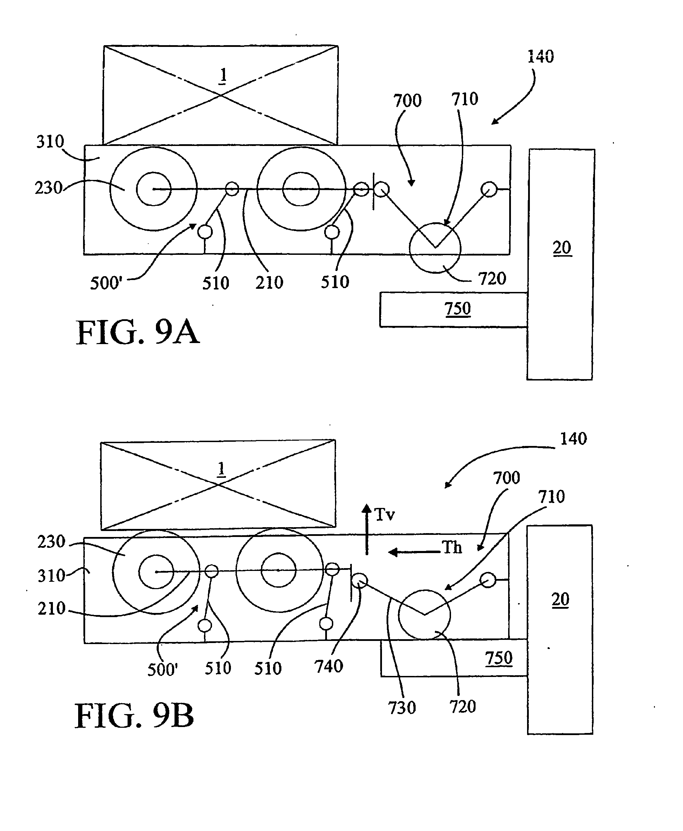

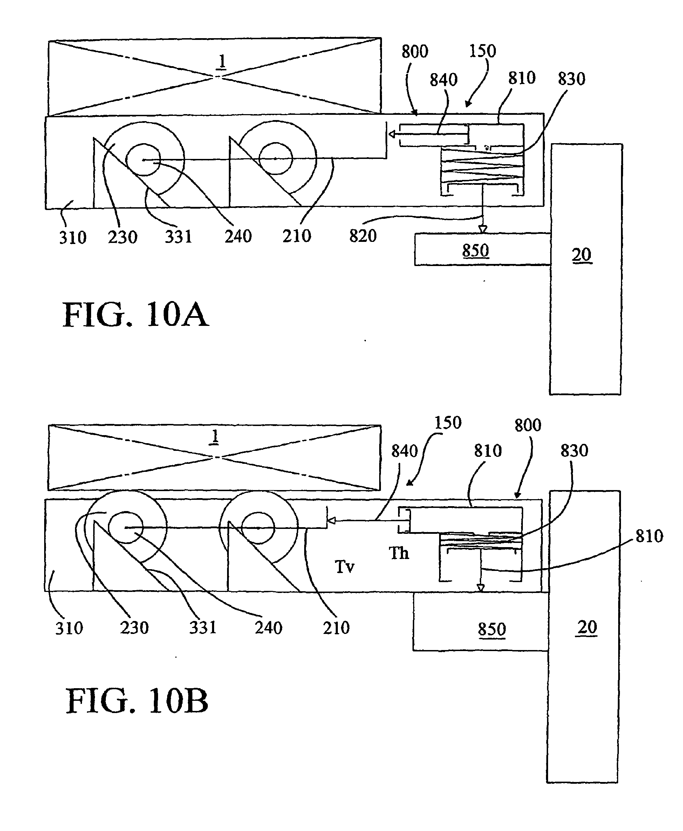

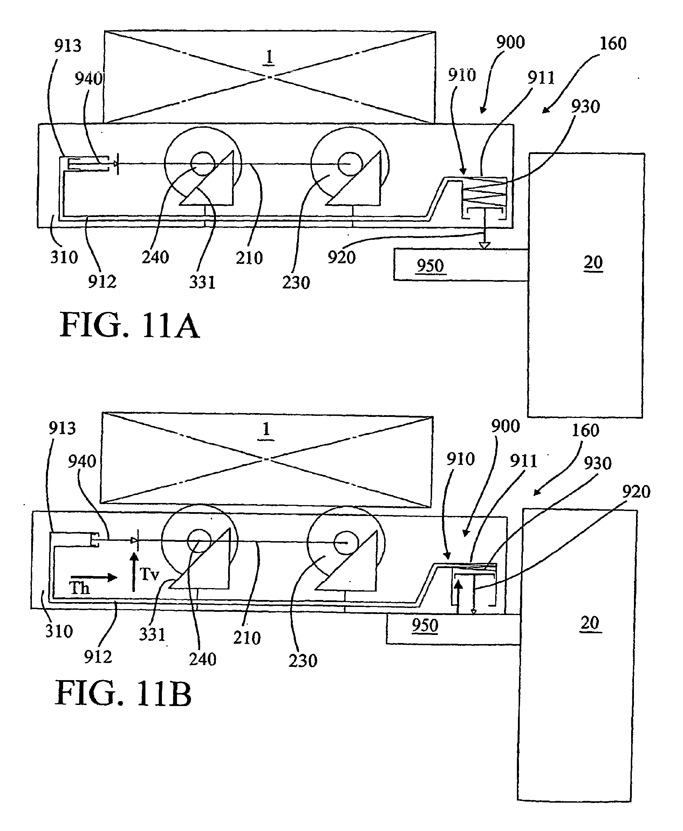

La structure porte-roulements 200 est associée à des moyens d'actionnement 400 qui sont, dans l'exemple représenté, mécaniques, automatiques et comportent une butée constituée par la barre d'accroche 450 rapportée sur la machine 20 et un actionneur sous la forme d'un levier pivotant 410 intégré au dispositif à roulement 100 et destiné à coopérer avec ladite butée. La barre d'accroche est par exemple fixée sur la machine 20 par des tirants 451 ou par tout autre moyen approprié. Le levier pivotant 410 est sensiblement triangulaire à trois sommets et est disposé devant le contre-rail 210 dans la zone d'extrémité avant du rail 310. Ce levier pivotant 410 est monté autour d'un axe 420 solidaire du rail 310 et perpendiculaire à la direction Th. Il est agencé pour transformer une force verticale exercée par la barre d'accroche 450 lors de l'accrochage des fourches 10 sur la machine 20 en une force horizontale apte à déplacer le contre-rail 210 en translation horizontale. Ainsi, l'effort transmis par ce levier pivotant 410 au contre-rail 210 est sensiblement proportionnel à l'importance de la charge 1. Ce levier pivotant 410 comporte trois zones d'appui distinctes, formant les trois sommets du triangle, et constituées par des organes roulants : un rouleau 430 disposé en regard de l'encoche 350 inférieure du rail 310 et agencé pour venir en contact avec la barre d'accroche 450, un rouleau 440 en appui roulant sur l'extrémité avant du contre-rail 210 et un galet 230 agencé pour compléter les organes de roulement 230 de la structure porte-roulements 200. Bien entendu, ces moyens d'actionnement 400 peuvent être constitués par tout autre moyen équivalent, comme par exemple un vérin (cf. fig. 10 et 11), un système vis-écrou, une genouillère (cf. fig. 8 et 9), un levier simplifié (cf. fig .5 et 6), un organe roulant associé à une rampe inclinée (cf. fig. 7), etc.

Les figures 4A et 4B illustrent le fonctionnement de ce levier pivotant 410. Dans la figure 4B, le levier pivotant 410 est au repos, ce qui correspond à la position basse du contre-rail 210 dans laquelle les galets 230 sont escamotés à l'intérieur du rail 310. Cette position basse est stable. Dans la figure 4A, le levier pivotant 410 est actionné par la barre d'accroche 450 rapportée sur la machine 20 lors de la descente des fourches 10 quand l'appareil de manutention s'accroche à la machine 20. La barre d'accroche 450 exerce sur le levier pivotant 410 par le rouleau 430 une force verticale vers le haut entraînant sa rotation dans le sens anti-horaire d'un angle d'environ 45°, amenant le galet 230 du levier 410 dans le prolongement des autres galets 230 et poussant le contre-rail 210 en translation horizontale Th, ce contre-rail effectuant simultanément une translation verticale Tv grâce au déplacement des rouleaux 240 sur les rampes inclinées 331. Le contre-rail 210 est amené en position haute dans laquelle les galets 230 sont saillants au-dessus de la surface S du rail 310. Cette position haute n'est pas stable puisque, lorsque les fourches 10 sont dégagées de la barre d'accroche 450, le contre-rail 210 descend les rampes inclinées 331 par gravité pour revenir en position basse, en ramenant simultanément le levier pivotant 410 dans sa position repos (cf. fig. 4B).

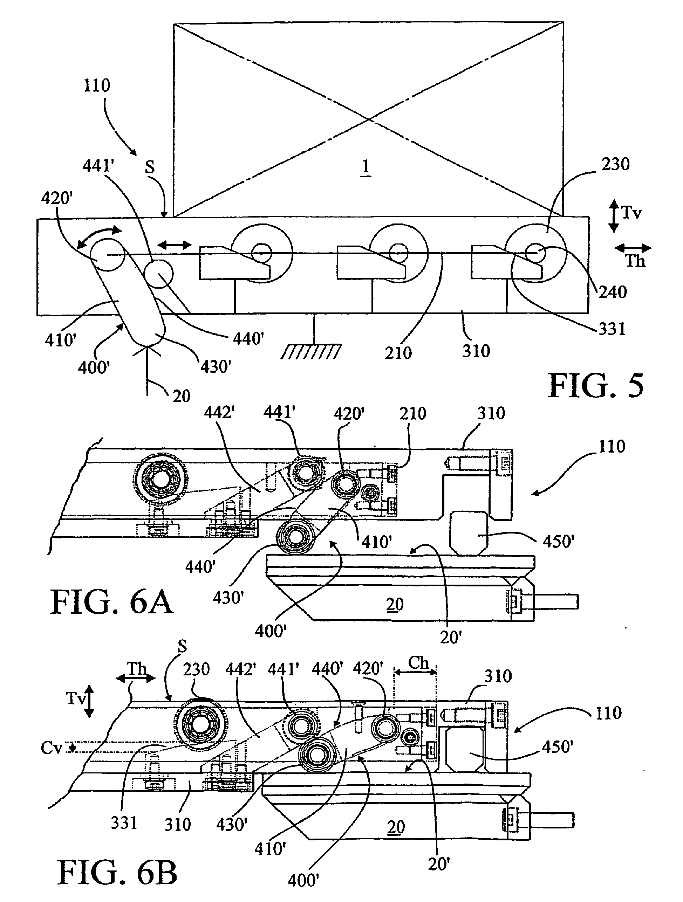

Les figures 5 et 6 illustrent un dispositif à roulements 110 similaire au précédent, seuls les moyens d'actionnement 400' étant différents. Ces moyens d'actionnement 400' comportent un levier pivotant 410' droit à deux extrémités coopérant avec une butée mécanique constituée par la table 20' de la machine 20.Ce levier pivotant 410' est monté à l'une de ses extrémités autour d'un axe 420' solidaire du contre-rail 210 et orienté dans une direction sensiblement perpendiculaire au déplacement horizontal Th de ce contre-rail 210. Comme précédemment, il est agencé pour transformer la force verticale exercée directement par la table 20' de la machine 20 lors de l'accrochage des fourches 10 en une force horizontale apte à déplacer le contre-rail 210 en translation horizontale Th. Ce levier pivotant 410' comporte deux zones d'appui 430', 440'. La zone d'appui 430' est prévue à l'extrémité libre du levier pivotant 410' et est destinée à entrer en contact avec la table 20' de la machine 20 lorsque les fourches 10 s'accrochent à la barre d'accroche 450'. La zone d'appui 440' est constituée d'une rampe de roulement s'étendant entre les deux extrémités du levier pivotant 410' selon un profil légèrement courbe et apte à coopérer avec un organe rotatif 441'solidaire du rail 310 et monté à l'extrémité d'un bras support 442'.

Les figures 6A et 6B illustrent le fonctionnement de ce levier pivotant 410'. Dans la figure 6A, le levier pivotant 410' est au repos, ce qui correspond à la position basse du contre-rail 210 dans laquelle les galets 230 sont escamotés à l'intérieur du rail 310. Cette position basse est stable. Dans la figure 6B, le levier pivotant 410' est actionné par la table 20' de la machine 20 qui transmet une force verticale vers le haut provoquant sa rotation dans le sens horaire d'un angle d'environ 30°, la rampe de roulement 440' se déplaçant par rapport à l'organe rotatif 441' fixe en générant le déplacement du contre-rail 210 en translation horizontale Th. Ce dernier effectue simultanément une translation verticale Tv grâce au déplacement des rouleaux 240 sur les rampes inclinées 331. Le contre-rail 210 est amené en position haute dans laquelle les galets 230 sont saillants au-dessus de la surface S du rail 310. Cette position haute n'est pas stable puisque, lorsque les fourches 10 sont dégagées de la machine 20, le contre-rail 210 descend les rampes inclinées 331 par gravité pour revenir en position basse, en ramenant le levier pivotant 410' dans sa position repos (cf. fig. 6B).

Les figures 7A à 7C illustrent un troisième dispositif à roulements 120 dans lequel les moyens d'actionnement 600 comportent un actionneur sous la forme d'un organe roulant 610 solidaire du contre-rail 210 et associé à une butée formée d'une rampe inclinée 620 prévue dans une barre d'accroche 650 rapportée sur la machine 20. L'organe roulant 610 est par exemple un rouleau monté autour d'un axe à l'extrémité avant du contre-rail 210 et la rampe inclinée 620 est ménagée entre deux flancs latéraux de la barre d'accroche 650. Ces flancs latéraux comportent des glissières 640 parallèles et verticales aptes à recevoir des tenons 630 prévus de part et d'autre de l'extrémité avant du rail 310 pour assurer l'accrochage mécanique des fourches 10 par rapport à la machine 20.

Les figures 7A et 7C illustrent le fonctionnement de ces moyens d'actionnement 600. Dans la figure 7A, le dispositif à roulements 120 est au repos, ce qui correspond à la position basse du contre-rail 210 dans laquelle les galets 230 sont escamotés à l'intérieur du rail 310. Cette position basse est stable. Dans la figure 7C, le rouleau 610 roule sur la rampe inclinée 620 lors de la descente des fourches 10 pour accrocher l'appareil de manutention à la machine 20. La force verticale exercée par la barre d'accroche 650 est transformée en force horizontale sur le contre-rail 210 grâce à la combinaison de la rampe inclinée 620 avec le rouleau 610. Le contre-rail 210 effectue simultanément à sa translation horizontale Th une translation verticale Tv grâce au déplacement des rouleaux 240 sur les rampes inclinées 331. Le contre-rail 210 est amené en position haute dans laquelle les galets 230 sont saillants au-dessus de la surface S du rail 310. Cette position haute n'est pas stable puisque, lorsque les fourches 10 sont dégagées de la machine 20 vers le haut, l'organe roulant 610 remonte la rampe inclinée 620 permettant au contre-rail 210 de descendre les rampes inclinées 331 par gravité pour revenir en position basse (cf. fig. 7A).

Les figures 8A et 8B représentent schématiquement un quatrième dispositif à roulements 130 dans lequel les moyens d'actionnement 700 comportent un actionneur sous la forme d'une genouillère 710 intégrée au dispositif à roulements 130 et associée à une butée formée d'une barre d'accroche 750 rapportée sur la machine 20. La genouillère 710 comporte un organe roulant 720 monté à l'intersection de deux bras de levier 730 articulés. Les extrémités de ces bras de levier 730 sont respectivement couplées au rail 310 et au contre-rail 210 par une articulation 740. Dans la figure 8A, la genouillère 710 est au repos, ce qui correspond à la position basse du contre-rail 210 dans laquelle les galets 230 sont escamotés à l'intérieur du rail 310. Cette position basse est stable. Dans la figure 8B, la genouillère 710 est actionnée par la barre d'accroche 750 qui exerce une force verticale vers le haut sur l'organe roulant 720 lors de la descente des fourches 10 pour l'accrochage de l'appareil de manutention à la machine 20. Cette force verticale vers le haut est transformée en une force horizontale sur le contre-rail 210 grâce aux bras de levier 730 et aux articulations 740. Le contre-rail 210 effectue simultanément à sa translation horizontale Th une translation verticale Tv grâce au déplacement des rouleaux 240 sur les rampes inclinées 331. Le contre-rail 210 est amené en position haute dans laquelle les galets 230 sont saillants au-dessus de la surface S du rail 310. Cette position haute n'est pas stable puisque, lorsque les fourches 10 sont dégagées de la machine 20, le contre-rail 210 descend les rampes inclinées 331 par gravité pour revenir en position basse et ramener simultanément la genouillère 710 en position repos (cf. fig. 8A).

Les figures 9A et 9B représentent schématiquement un cinquième dispositif à roulements 140 dans lequel on retrouve les mêmes moyens d'actionnement 700 que précédemment. La différence réside dans les moyens d'élévation 500' qui comportent des biellettes 510 articulées et disposées entre le rail 310 et le contre-rail 210. Lorsque le contre-rail 210 est déplacé en translation horizontale Th par la genouillère 710 au contact de la barre d'accroche 750, il effectue simultanément une translation verticale Tv grâce au pivotement des biellettes 510 entre leur point fixe solidaire du rail 310 et leur point mobile solidaire du contre-rail 210. Les figures 9A et 9B illustrent le dispositif à roulements 140 respectivement en position escamotée et sortie.

Les figures 10A et 10B représentent schématiquement un sixième dispositif à roulements 150 dans lequel les moyens d'actionnement 800 comportent un actionneur sous la forme d'un vérin 810 intégré au dispositif à roulements 150 et associé à une butée formée d'une barre d'accroche 850 rapportée sur la machine 20. Le vérin 810 est un vérin double, hydraulique ou pneumatique, constitué d'une chambre et de deux pistons 820, 840 orientés perpendiculairement. Un des pistons 820 est disposé sensiblement verticalement et agencé pour entrer en contact avec la barre d'accroche 850. Il est associé à un ressort de rappel 830. L'autre piston 840 est disposé sensiblement horizontalement et est couplé à l'extrémité avant du contre-rail 210. Dans la figure 10A, le vérin 810 est au repos, ce qui correspond à la position basse du contre-rail 210 dans laquelle les galets 230 sont escamotés à l'intérieur du rail 310. Cette position basse est stable. Dans la figure 10B, le vérin 810 est actionné par la barre d'accroche 850 qui exerce une force verticale vers le haut sur le piston 820, le faisant remonter en comprimant son ressort de rappel 830 et en générant la sortie du piston 840 par le fluide contenu dans la chambre, ce piston 840 exerçant alors une force horizontale sur le contre-rail 210. Le contre-rail 210 effectue simultanément à sa translation horizontale Th une translation verticale Tv grâce au déplacement des rouleaux 240 sur les rampes inclinées 331. Le contre-rail 210 est amené en position haute dans laquelle les galets 230 sont saillants au-dessus de la surface S du rail 310. Cette position haute n'est pas stable puisque, lorsque les fourches 10 sont dégagées de la machine 20, le piston 820 redescend sous l'action de son ressort de rappel 230 permettant au contre-rail 210 de descendre les rampes inclinées 331 par gravité pour revenir en position basse, le vérin 810 étant ramené en position repos (cf. fig. 10A).

Les figures 11A et 11B représentent schématiquement un septième dispositif à roulements 160 similaire au précédent, les moyens d'actionnement 900 comportant également un actionneur sous la forme d'un vérin 910 intégré au dispositif à roulement 150 et associé à une butée formée d'une barre d'accroche 950 rapportée sur la machine 20. Dans cette variante, le vérin 910 est un vérin double, hydraulique ou pneumatique, constitué de deux pistons 920, 940 chacun associé à une chambre 911, 913 distincte, les deux chambres étant reliées par un conduit 912. Un des pistons 920 est disposé sensiblement verticalement et agencé pour entrer en contact avec la barre d'accroche 950. Il est associé à un ressort de rappel 930. L'autre piston 940 est disposé sensiblement horizontalement et est couplé à l'extrémité arrière du contre-rail 210. Dans cette variante, les rampes inclinées 331 sont inversées par rapport à celles des figures 10A et 10B . Le fonctionnement de ce dispositif à roulements 160 est le même que le précédent et ne sera pas repris.

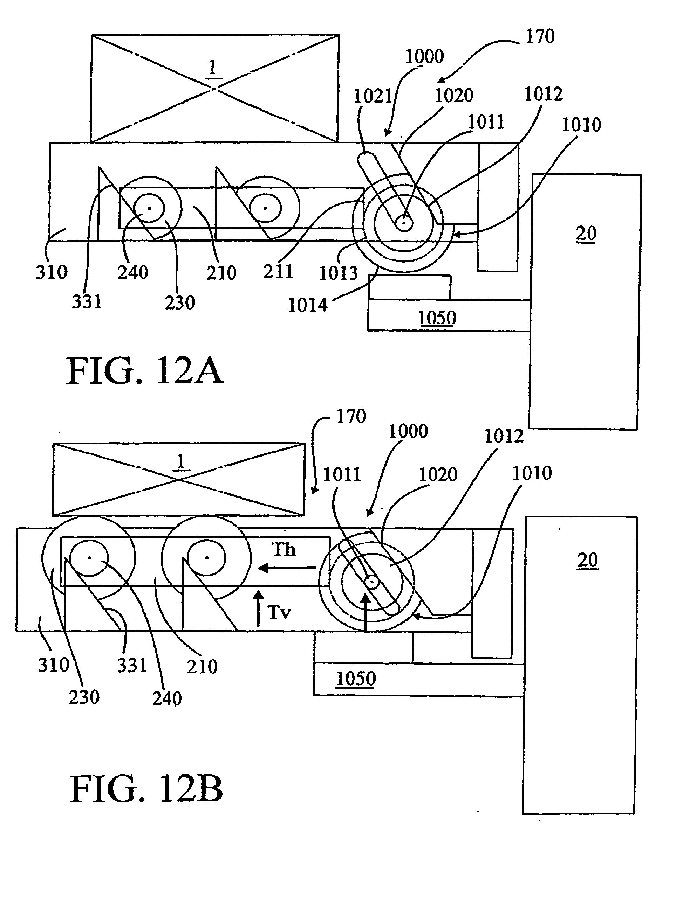

Les figures 12A et 12B représentent schématiquement un huitième dispositif à roulements 170 dans lequel les moyens d'actionnement 1000 comportent un actionneur sous la forme d'un organe rotatif 1010 coopérant avec une rampe inclinée 1020, intégré au dispositif à roulements 170, et associé à une butée formée d'une barre d'accroche 1050 rapportée sur la machine 20. La rampe inclinée 1020 est prévue dans la zone d'extrémité avant du rail 310 et orientée dans le sens des rampes inclinées 331 du rail 310. L'organe rotatif 1010 est monté mobile en rotation et en translation dans le rail 310 et guidé par son axe 1011 dans des rainures 1021 prévues dans les parois latérales du rail 310 et s'étendant sensiblement parallèlement à la rampe inclinée 1020. Il est formé de trois galets 1012, 1013, 1014 coaxiaux, de diamètres différents et mobiles en rotation l'un par rapport à l'autre : un premier galet 1012 destiné à rouler sur la rampe inclinée 1020, un deuxième galet 1013 destiné à rouler sur une rampe verticale 211 prévue à l'avant du contre-rail 210 et un troisième galet 1014 destiné à rouler sur le plan horizontal de la barre d'accrochage 1050. Dans la figure 12A, le dispositif à roulements 170 est au repos, ce qui correspond à la position basse du contre-rail 210 dans laquelle les galets 230 sont escamotés à l'intérieur du rail 310. Cette position basse est stable. Dans la figure 12B, l'organe rotatif 1010 est actionné par la barre d'accroche 1050 qui exerce sur lui une force verticale vers le haut par son troisième galet 1014, le faisant remonter en roulant sur la rampe inclinée 1020 par son premier galet 1012 et simultanément sur la rampe verticale 211 du contre-rail 210 par son deuxième galet 1013 exerçant alors une force horizontale sur ce contre-rail 210. Le contre-rail 210 effectue simultanément à sa translation horizontale Th une translation verticale Tv grâce au déplacement des rouleaux 240 sur les rampes inclinées 331. Le contre-rail 210 est amené en position haute dans laquelle les galets 230 sont saillants au-dessus de la surface S du rail 310. Cette position haute n'est pas stable puisque, lorsque les fourches 10 sont dégagées de la machine 20, l'organe rotatif 1010 redescend par gravité en suivant la rampe inclinée 1020 pendant que le contre-rail 210 descend simultanément les rampes inclinées 331 par gravité pour revenir en position basse, le dispositif à roulements 170 étant ramené en position repos (cf. fig. 12A).

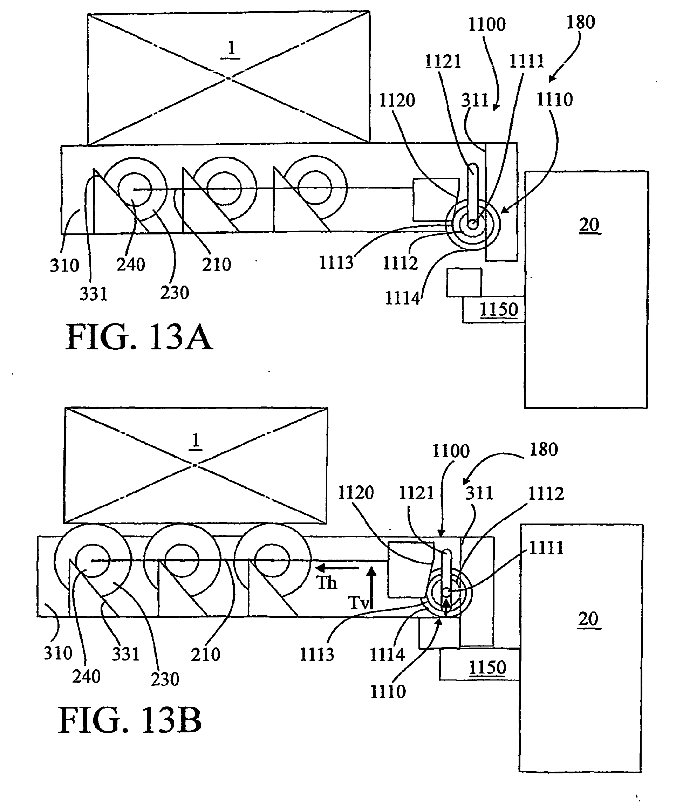

Les figures 13A et 13B représentent schématiquement un neuvième dispositif à roulements 180 similaire au précédent, les moyens d'actionnement 1100 comportant également un actionneur sous la forme d'un organe rotatif 1110 coopérant avec une rampe inclinée 1120, intégré au dispositif à roulement 180 et associé à une butée formée d'une barre d'accroche 1150 rapportée sur la machine 20. Dans cette variante, la rampe inclinée 1120 est prévue à l'extrémité avant du contre-rail 210 et orientée dans le sens opposé des rampes inclinées 331 du rail 310. L'organe rotatif 1110 est monté mobile en rotation et en translation dans le rail 310 et guidé par son axe 1111 dans des rainures 1121 prévues dans les parois latérales du rail 310 et s'étendant sensiblement verticalement. Il est formé de trois galets 1112, 1113, 1114 coaxiaux, de diamètres différents et mobiles en rotation l'un par rapport à l'autre : un premier galet 1112 destiné à rouler sur une rampe verticale 311 prévue dans la zone d'extrémité avant du rail 310, un deuxième galet 1113 destiné à rouler sur la rampe inclinée 1120 du contre-rail 210 et un troisième galet 1114 destiné à appuyer sur le plan horizontal de la barre d'accrochage 1150. Ce troisième galet 1114 peut être non rotatif, son déplacement étant limité à une translation verticale. Le fonctionnement de ce dispositif à roulements 180 est similaire au précédent 170.

Il apparaît clairement que le dispositif à roulements selon l'invention est issu d'une conception et d'une cinématique simples. Il est de ce fait plus économique aussi bien à l'achat qu'en maintenance, moins encombrant et plus résistant. Notamment, le contre-rail 210 peut aisément être retiré du rail 310 pour faciliter les opérations de nettoyage et de maintenance. L'actionneur est intégré dans le rail 310 et son encombrement ne pénalise pas les performances de l'appareil de manutention. Cet actionneur a l'avantage d'être activé mécaniquement et automatiquement par une butée lors de l'accrochage des fourches sur la machine, sans apport d'énergie.

Le dispositif à roulements tel que décrit peut être proposé à la vente fourche pour équiper des appareils de manutention déjà en service, soit intégrés de suite dans des appareils de manutention neufs. C'est la raison pour laquelle l'invention concerne également des appareils de manutention (non représenté) équipés d'un tel dispositif à roulements.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif à roulements (100-180) pour déplacer une charge (1) dans un pian sensiblement horizontal entre un appareil de manutention à fourches et une machine (20), ce dispositif étant destiné à équiper les fourches (10) dudit appareil de manutention et comportant au moins un rail (310) définissant au moins une surface d'appui plane (S) apte à porter ladite charge (1) quand elle est statique, ce rail (310) étant creux sensiblement horizontal et pourvu d'une ouverture longitudinale (320), au moins un contre-rail (210) logé dans ledit rail (310) et dans lequel sont montés des organes de roulement (230) en regard de ladite ouverture longitudinale (320), ces organes de roulement (230) étant compris dans un plan sensiblement parallèle à ladite surface (S) et aptes à porter ladite charge (1) quand elle est en mouvement, au moins une des structures (310 ou 210) étant couplée à des moyens d'actionnement (400, 400', 600-1000) pour être mobile par rapport à l'autre entre au moins une position basse et une position haute, dans lesquelles la charge est portée soit par le rail (310), soit par le contre-rail (210), ces moyens d'actionnement étant agencés pour déplacer la structure dite mobile (310 ou 210) au moins en translation horizontale (Th), des moyens d'élévation (500, 500') étant disposés entre les deux structures (210, 310) de manière à générer un déplacement vertical (Tv) de la structure dite mobile simultanément à son déplacement horizontal (Th), **caractérisé en ce que** les moyens d'actionnement (400, 400', 600-1100) comportent au moins une butée (450, 20', 650-1150) destinée à être rapportée sur ladite machine (20) et au moins un actionneur (410, 410', 610-1110) disposé entre les deux structures (210, 310) et agencé pour coopérer avec ladite butée de manière à transformer une force verticale exercée par ladite butée sur ledit actionneur en une force horizontale exercée par ledit actionneur sur la structure dite mobile (310 ou 210) pour la déplacer en translation horizontale (Th).

2. Dispositif (100-130, 150-180) selon la revendication 1, **caractérisé en ce que** lesdits moyens d'élévation (500) comportent des rampes inclinées (331) solidaires dudit rail (310) agencées pour coopérer avec lesdits organes de roulement (230) dudit contre-rail (210).

3. Dispositif selon la revendication 2, **caractérisé en ce que** lesdites rampes inclinées (331) définissent au moins une première zone (331a) agencée pour laisser dépasser au moins le sommet des organes de roulement (230), une seconde zone (331b) agencée pour cacher les organes de roulement (230) et une zone intermédiaire (331c) agencée pour former en combinaison avec les organes de roulement (230) des rampes d'élévation.

4. Dispositif selon la revendication 3, **caractérisé en ce que** chaque organe de roulement comporte au moins un galet (230) agencé pour porter ladite charge (1) en position de roulement, ce galet (230) étant monté sur un axe (220) sensiblement horizontal entre deux rouleaux (240) de plus petit diamètre, lesdits rouleaux (240) étant en contact avec lesdites rampes inclinées (331).

5. Dispositif (140) selon la revendication 1, **caractérisé en ce que** lesdits moyens d'élévation (500) comportent des biellettes (510) articulées, une de leurs extrémités étant couplées audit rail (310), l'autre extrémité étant couplée audit contre-rail (210).

6. Dispositif selon la revendication 1, **caractérisé en ce que** ledit actionneur est choisi dans le groupe comprenant au moins un levier pivotant (410, 410), une genouillère (710),un organe rotatif (610), un vérin (810,910).

7. Dispositif selon la revendication 1, **caractérisé en ce que** ledit rail (310) est fixe et ledit contre-rail (210) portant lesdits organes de roulement (230) est mobile et coopère avec ledit actionneur (410, 410', 610-1110), cet actionneur étant agencé pour déplacer ledit contre-rail (210) de sa position basse à sa position haute lorsqu'il est en contact avec ladite butée (450, 20', 650-1150), et pour autoriser la descente dudit contre-rail (210) en position basse par gravité lorsqu'il n'est plus en contact avec ladite butée.

8. Dispositif (100) selon la revendication 7, **caractérisé en ce que** l'actionneur comporte au moins un levier pivotant (410) monté sur ledit rail (310) par un axe (420) orienté dans une direction sensiblement perpendiculaire au déplacement horizontal (Th) du contre-rail (210), ce levier pivotant (410) comportant au moins deux zones d'appui (430, 440) disposées de part et d'autre dudit axe (420), dont une (440) est en contact avec le contre-rail (210) et l'autre (430) est destinée à coopérer avec ladite butée (450).

9. Dispositif selon la revendication 8, **caractérisé en ce que** ledit levier pivotant (410) comporte au moins un galet (230) disposé entre les deux zones d'appui (430, 440) et agencé pour compléter les organes de roulement (230) dudit contre-rail (210) quand il est en position haute.

10. Dispositif (110) selon la revendication 7, **caractérisé en ce que** l'actionneur comporte au moins un levier pivotant (410) monté sur ledit contre-rail (210) par un axe (420) orienté dans une direction sensiblement perpendiculaire au déplacement horizontal (Th) de ce contre-rail (210), ce levier pivotant (410') comportant au moins deux zones d'appui (430', 440'), dont une (440') est en contact avec le rail (310) et l'autre (430') est destinée à coopérer avec ladite butée.

11. Dispositif selon la revendication 10, **caractérisé en ce que** la zone d'appui (440) est constituée d'une rampe de roulement apte à coopérer avec un organe rotatif (441') solidaire dudit rail (310).

12. Dispositif (120) selon la revendication 7, **caractérisé en ce que** l'actionneur comporte au moins un organe rotatif (610) monté sur ledit contre-rail (210) par un axe orienté sensiblement perpendiculairement au déplacement horizontal (Th) de ce contre-rail, cet organe rotatif (610) étant agencé pour rouler sur une rampe inclinée (620) intégrée à ladite butée (650), ledit rail (310) étant guidé en translation verticale dans cette butée (650) par un système tenons (630) - glissières (640).

13. Dispositif (130, 140) selon la revendication 7, **caractérisé en ce que** l'actionneur comporte au moins une genouillère (710) constituée d'au moins une zone d'appui (720) disposée à l'intersection de deux bras de levier (730) articulés et couplés respectivement audit rail (310) et audit contre-rail (210) selon des axes orientés sensiblement perpendiculairement au déplacement horizontal (Th) dudit contre-rail (210), la zone d'appui (710) étant agencée pour coopérer avec ladite butée (750).

14. Dispositif selon la revendication 8, 10 ou 13, **caractérisé en ce que** lesdites zones d'appui (430, 440, 430', 720) sont constituées par des organes rotatifs.

15. Dispositif (150, 160) selon la revendication 7, **caractérisé en ce que** l'actionneur comporte au moins un vérin double (810, 910), dont un premier piston (840, 940) coopère avec ledit contre-rail (210) et est orienté sensiblement parallèlement à son déplacement horizontal (Th) et le second piston (820, 920) est destiné à coopérer avec ladite butée (850, 950) et est orienté sensiblement perpendiculairement par rapport au premier piston (840, 940).

16. Dispositif selon la revendication 15, **caractérisé en ce que** le second piston (820, 920) est associé à un organe de rappel (830, 930)..

17. Dispositif (160) selon la revendication 15, **caractérisé en ce que** les chambres (911, 913) des pistons (920, 940) sont distinctes et reliées par au moins un conduit (912) logé dans ledit rail (310).

18. Dispositif (170, 180) selon la revendication 7, **caractérisé en ce que** l'actionneur comporte au moins un organe rotatif (1010, 1110) monté sur ledit rail (310) par un axe (1011, 1111) orienté sensiblement perpendiculairement au déplacement horizontal (Th) dudit contre-rail (210) et guidé en translation dans ledit rail (310) par des rainures (1021,1121), cet organe rotatif (1010, 1110) étant agencé pour coopérer avec deux rampes (1020,211 ; 311,1120) prévues respectivement sur le rail (310) et le contre-rail (210), au moins une des rampes (1020,1120) étant inclinée.

19. Dispositif selon la revendication 18, **caractérisé en ce que** ledit organe rotatif (1010, 1110) comporte au moins trois galets (1012, 1013,1014 ; 1112, 1113, 1114) coaxiaux, de diamètres différents, dont deux au moins sont mobiles l'un par rapport à l'autre, ces galets étant agencés pour coopérer respectivement avec la rampe (1020, 311) solidaire du rail (310), la rampe (211, 1120) solidaire du contre-rail (210) et la butée (1050,1150).

20. Dispositif selon la revendication 1, **caractérisé en ce que** ladite butée est choisie parmi au moins une barre d'accroche (450, 650-1150) apte à recevoir l'extrémité avant desdites fourches (10) et une table (20) de machine, et présente au moins une forme compatible avec ledit actionneur (410, 410', 610-1110).

21. Appareil de manutention à fourches agencé pour déplacer une charge (1) dans un plan sensiblement horizontal entre cet appareil de manutention et une machine (20), **caractérisé en ce que** ses fourches (10) comportent ledit dispositif à roulements (100-180) selon l'une quelconque des revendications précédentes.

## Claims

1. A roller device (100-180) for displacing a load (1) in a generally horizontal plane between a load handling apparatus with forks and a machine (20), said device being designed to equip the forks (10) of said handling device and comprising at least one rail (310) defining at least one plane contact surface (S) capable of supporting said load (1) when it is static, said rail (310) being hollow, generally horizontal, and provided with a longitudinal opening (320), at least one counter-rail (210) housed inside said rail (310) and inside of which the roller elements (230) are attached opposite said longitudinal opening (320), said roller elements (230) being located in a plane that is generally parallel to said surface (S) and capable of supporting said load (1) when it is moving, at least one of said structures (310 or 210) being connected to an actuating means (400, 400', 600-1000) so as to be movable relative to the other between at least one lower position and one upper position, in which positions the load is supported either by the rail (310) or by the counter-rail (210), said actuation means being disposed to displace the structure called the movable structure (310 or 210) in at least horizontal translation (Th), with lifting means (500, 500') being disposed between the two structures (210,310) to cause the structure known as the movable structure to move in vertical displacement (Tv) simultaneously with its horizontal displacement (Th), **characterized in that** the actuating means (400, 400', 610-1100) comprises at least one block (450, 20', 650-1150) designed to be attached to said machine (20) and at least one actuator (410, 410', 610-1110) disposed between the two structures (210, 310) and designed to cooperate with said block and to transform a vertical force exerted by said block on said actuator into a horizontal force exerted by said actuator on the structure known as the movable structure (310 or 210) to displace it in horizontal translation (Th).

2. A device (100-130), 150-180) according to claim 1 **characterized in that** said lifting means (500) comprises inclined ramps (331) integral with said rail (310) designed to cooperate with said roller elements (230) on said counter-rail (210).

3. A device according to claim 2 **characterized in that** said inclined ramps (331) define at least a first zone (331a) designed to allow at least the tops of the roller element (230) to project, a second zone (331b) designed to cover the roller elements (230), and an intermediate zone (331c) forming, in combination with the roller elements, the lifting ramps.

4. A device according to claim 3 **characterized in that** each roller element comprises at least one roller (230) designed to support said load (1) in the moving position, said roller (230) being attached to a generally horizontal axle (220) between two rollers (240) of smaller diameter, said rollers (240) being in contact with said inclined ramps (331).

5. A device (140) according to claim 1 **characterized in that** said elevation means (500') comprises articulated bearings (510) having one extremity connected to said rail (310) and the other extremity connected to said counter-rail (210).

6. A device according to claim 1 **characterized in that** said actuator is chosen from the group comprising at least a pivoting lever (410, 410'), a ball and socket(710), a rotating element (610), or a cylinder (810, 910).

7. A device according to claim 1 **characterized in that** said rail (310) is fixed and said counter-rail (210) supporting said roller elements (230) is movable and cooperates with said actuator (410, 410', 610-1110), said actuator being designed to displace said counter-rail (210) from the lower position to the upper position when it is in contact with said block (450, 20', 650-1150) and to allow said counter-rail (210) to descend into the lower position by gravity when it is no longer in contact with said block.

8. A device (100) according to claim 7 **characterized in that** the actuator comprises at lest one pivoting lever (410) attached to said rail (310) by an axle (420) oriented in a generally perpendicular direction to the direction of horizontal displacement (Th) of the counter-rail (210), said pivoting lever (410) comprising at least two contact zones (430, 440) located on either side of said axle (420), one of which (440) is in contact with the counter-rail (210) and the other of which (430) is designed to cooperate with said block (450).

9. A device according to claim 8 **characterized in that** said pivoting lever (410) comprises at least one roller (230) located between the two contact zones (430, 440) and designed to complement the roller elements (230) on said counter-rail (210) when it is in the upper position.

10. A device (110) according to claim 7 **characterized in that** the actuator comprises at least one pivoting lever (410') attached to said counter-rail (210) by an axle (420') oriented in a generally perpendicular direction to the direction of horizontal displacement (Th) by the counter-rail (210), said pivoting lever (410) comprising at least two contact zones (430', 440'), one ofwhich (440') is in contact with the rail (310) and the other of which (430') is designed to cooperate with said block

11. A device according to claim 10 **characterized in that** the contact zone (440') consists of a travel ramp capable of cooperating with a rotating element (441') integral with said rail (310).

12. A device (120) according to claim 7 **characterized in that** the actuator comprises at least one rotating element (610) attached to said counter-rail (210) by an axle oriented in a generally perpendicular direction to the direction of horizontal displacement (Th) of the counter-rail), said rotating element (610) being designed to move along an inclined ramp (620) integrated within said block (650), said rail (310) being guided in vertical translation within said block (650) by a tenon (630) and slide (640) system.

13. A device (130, 140) according to claim 7 **characterized in that** the actuator comprises at least one ball and socket (710) consisting of at least one contact zone (720) disposed at the intersection of two articulated lever arms (730) respectively connected to said rail (310) and to said counter-rail (210) along axles that are generally perpendicular to the horizontal displacement (Th) of said counter-rail (210), said contact zone (710) being designed to cooperate with said block (750).

14. A device according to claim 8, 10 or 13 **characterized in that** said contact zones (430, 440, 430', 720) consist of rotating elements.

15. A device (150, 160) according to claim 7 **characterized in that** the actuator comprises at least one double cylinder (810, 910), a first piston (840, 940) of which cooperates with said counter-rail (210) and is generally parallel to its horizontal displacement (Th), and the second (820, 920) of which is designed to cooperate with said block (850, 950) and is generally perpendicular relative to the first piston (840, 940).

16. A device according to claim 15 **characterized in that** the second piston (820, 920) is associated with a recall means (830, 930).

17. A device (160) according to claim 15 **characterized in that** the chambers (911, 913) of the pistons (920, 940) are separate and interconnected by at least one conduit (912) housed in said rail (310).

18. A device (170, 180) according to claim 7 **characterized in that** the actuator comprises at least one rotating element (1010, 1110) attached to said rail (310) by an axle (1011, 1111) oriented generally perpendicular to the horizontal displacement (Th) of said counter-rail (210) and guided in translation within said rail (310) by grooves (1021, 1121), said rotating element (1010, 1110) being designed to cooperate with two ramps (1020, 211; 311, 1120) provided on the rail (310) and the counter-rail (210), respectively, at least one of said ramps (1020, 1120) being inclined.

19. A device according to claim 18 **characterized in that** said rotating element (1010, 1110) comprises at least three coaxial rollers (1012, 1013, 1014; 1112, 1113, 1114) of different diameters, at least two of which are movable in relation to each other, said rollers being designed to respectively cooperate with the ramp (1021, 311) integral with the rail (310), the ramp (211, 1120) integral with the counter-rail (210), and the block (1050, 1150).

20. A device according to claim 1 **characterized in that** said block is selected from among at least a tie rod (450, 650-1150) capable of receiving the front extremity of said forks (10) and a machine table (10'), and is at least partially shaped to be compatible with said actuator (410, 410', 610-1110).

21. A load handling device with forks for displacing a load (1) in a generally horizontal plane between said load handling device and a machine (20), **characterized in that** its forks (10) comprise said roller device (100-180) according to any one of the preceding claims.

## Patentansprüche

1. Kugellagervorrichtung (100-180) zur Verlagerung einer Last (1) auf einer praktisch horizontalen Ebene zwischen einem Handhabungsgerät mit Gabeln und einer Maschine (20), wobei die Vorrichtung dazu bestimmt ist, die Gabeln (10) des Handhabungsgerätes auszurüsten und mindestens eine Schiene (310) umfasst, die mindestens eine ebene Auflagefläche (S) aufweist, die zum Tragen der Last (1) in der Lage ist, wenn sie statisch ist, wobei die Schiene (310) hohl, praktisch horizontal und mit einer Längsöffnung (320) versehen ist, mit mindestens einer in der Schiene (310) gelagerten Leitschiene (210), in der Kugellagerelemente (230) der besagten Längsöffnung (320) gegenüberliegend angebracht sind, wobei die Kugellagerelemente (230) in einer praktisch parallel zu der Oberfläche (S) verlaufenden Ebene enthalten und zum Tragen der Last (1) in der Lage sind, wenn sie sich in Bewegung befindet, wobei mindestens eine der Konstruktionen (310 oder 210) mit Betätigungseinrichtungen (400,400',600-1000) verbunden ist, um im Verhältnis zueinander zwischen mindestens einer unteren Position und einer oberen Position beweglich zu sein, in denen die Last entweder durch die Schiene (310) oder durch die Leitschiene (210) getragen wird, wobei die Betätigungseinrichtungen zur Verlagerung der besagten beweglichen Konstruktion (310 oder 210) mindestens in Form einer horizontalen Translation (Th) angeordnet sind, wobei die Hubeinrichtungen (500,500') zwischen den zwei Konstruktionen (210,310) so angeordnet sind, dass sie eine Vertikalverlagerung (Tv) der besagten beweglichen Konstruktion gleichzeitig mit ihrer Horizontalverlagerung (Th) erzeugen, **dadurch gekennzeichnet , dass** die Betätigungseinrichtungen (400,400',600-1100) mindestens einen Anschlag (450,20',650-1150) umfassen, der dazu bestimmt ist, auf die Maschine (20) zurückgebracht zu werden, und mindestens ein Stellglied (410,410',610-1110), welches zwischen den zwei Konstruktionen (210,310) positioniert und angeordnet ist, um mit dem Anschlag so zusammenzuwirken, dass eine durch den Anschlag auf das Stellglied ausgeübte vertikale Kraft in eine durch das Stellglied auf die besagte bewegliche Konstruktion (310 oder 210) ausgeübte Kraft umgewandelt wird, um sie in Form einer horizontalen Translation (Th) zu verlagern.

2. Vorrichtung (100-130,150-180) nach Anspruch 1, **dadurch gekennzeichnet , dass** die Hubeinrichtungen (500) geneigte Rampen (331) umfassen, die fest mit der Schiene (310) verbunden und so angeordnet sind, dass sie mit den Kugellagerelementen (230) der Leitschiene (210) zusammenwirken.

3. Vorrichtung nach Anspruch 2, **dadurch gekennzeichnet, dass** die geneigten Rampen (331) mindestens eine erste Zone (331a) festlegen, die angeordnet ist, um mindestens die Spitze der Kugellagerelemente (230) vorbeigehen zu lassen, eine zweite Zone (331b), die angeordnet ist, um die Kugellagerelemente (230) zu verbergen, und eine Zwischenzone (331c), die angeordnet ist, um in Kombination mit den Kugellagerelementen (230) Hubrampen auszubilden.

4. Vorrichtung nach Anspruch 3, **dadurch gekennzeichnet, dass** jedes Kugellagerelement mindestens eine Zapfenrolle (230) umfasst, die angeordnet ist, um die Last (1) in Rollposition zu tragen, wobei die Zapfenrolle (230) auf einer Achse (220) praktisch horizontal zwischen zwei Rollen (240) mit kleinerem Durchmesser angebracht ist, wobei die Rollen (240) mit den besagten geneigten Rampen (331) in Berührung stehen.

5. Vorrichtung (140) nach Anspruch 1, **dadurch gekennzeichnet, dass** die Hubeinrichtungen (500') gelenkig gelagerte Schwingarme (510) umfassen, wobei eines ihrer äußersten Enden mit der Schiene (310) verbunden ist, wobei das andere äußerste Ende mit der Leitungsschiene (210) verbunden ist.

6. Vorrichtung nach Anspruch 1, **dadurch gekennzeichnet, dass** das Stellglied aus der mindestens einen Schwinghebel (410,410'), ein Kugelgelenk (710), ein drehbares Element (610), einen Zylinder (810,910) umfassenden Gruppe ausgewählt ist.

7. Vorrichtung nach Anspruch 1, **dadurch gekennzeichnet, dass** die Schiene (310) fixiert ist, und dass die Leitschiene (210), welche die Kugellagerelemente (230) trägt, beweglich ist und mit dem Stellglied (410,410',610-1110) zusammenwirkt, wobei das Stellglied angeordnet ist, um die Leitschiene (210) von ihrer unteren Position in ihre obere Position zu verlagern, wenn sie mit dem Anschlag (450,20',650-1150) in Berührung steht, und um die Abwärtsbewegung der Leitschiene (210) in die untere Position durch Schwerkraft zuzulassen, wenn sie nicht mehr mit dem Anschlag in Berührung steht.

8. Vorrichtung (100) nach Anspruch 7, **dadurch gekennzeichnet, dass** das Stellglied mindestens einen Schwinghebel (410) umfasst, der auf der Schiene (310) mittels einer Achse (420) angebracht ist, die in einer zu der Horizontalverlagerung (Th) der Leitschiene (210) praktisch senkrechten Richtung ausgerichtet ist, wobei der Schwinghebel (410) mindestens zwei Auflagezonen (430,440) umfasst, die beiderseits der Achse (420) angeordnet sind, wovon eine (440) mit der Leitschiene (210) in Berührung steht, und die andere (430) zum Zusammenwirken mit dem Anschlag (450) bestimmt ist.

9. Vorrichtung nach Anspruch 8, **dadurch gekennzeichnet, dass** der Schwinghebel (410) mindestens eine Zapfenrolle (230) umfasst, die zwischen den zwei Auflagezonen (430,440) positioniert und angeordnet ist, um die Kugellagerelemente (230) der Leitschiene (210) zu ergänzen, wenn sie sich in der oberen Position befindet.

10. Vorrichtung (110) nach Anspruch 7, **dadurch gekennzeichnet, dass** das Stellglied mindestens einen Schwinghebel (410') umfasst, der auf der Schiene (310) mittels einer Achse (420') angebracht ist, die in einer zu der Horizontalverlagerung (Th) der Leitschiene (210) praktisch senkrechten Richtung ausgerichtet ist, wobei der Schwinghebel (410') mindestens zwei Auflagezonen (430',440') umfasst, wovon eine (440') mit der Schiene (310) in Berührung steht, und die andere (430') zum Zusammenwirken mit dem Anschlag bestimmt ist.

11. Vorrichtung nach Anspruch 10, **dadurch gekennzeichnet, dass** die Auflagezone (440') aus einer Kugellagerrampe besteht, die zum Zusammenwirken mit einem fest mit der Schiene (310) verbundenen drehbaren Element (441') in der Lage ist.

12. Vorrichtung (120) nach Anspruch 7, **dadurch gekennzeichnet, dass** das Stellglied mindestens ein drehbares Element (610) umfasst, welches auf der Leitschiene (210) mittels einer praktisch senkrecht zu der Horizontalverlagerung (Th) der Leitschiene ausgerichteten Achse angebracht ist, wobei das drehbare Element (610) zum Rollen auf einer in den Anschlag (650) integrierten geneigten Rampe (620) angeordnet ist, wobei die Schiene (310) in Form einer vertikalen Translation in dem Anschlag (650) mittels eines Zapfen-(630)-Gleitschienen-(640)-Systems geführt ist.

13. Vorrichtung (130,140) nach Anspruch 7, **dadurch gekennzeichnet, dass** das Stellglied mindestens ein Kugelgelenk (710) umfasst, welches aus mindestens einer Auflagezone (720) besteht, die am Schnittpunkt von zwei gelenkig gelagerten Hebelarmen (730) angeordnet ist, die jeweils mit der Schiene (310) und mit der Leitschiene (210) entsprechend den praktisch senkrecht zu der Horizontalverlagerung (Th) der Leitschiene (210) ausgerichteten Achsen verbunden sind, wobei die Auflagezone (710) zum Zusammenwirken mit dem Anschlag (750) angeordnet ist.

14. Vorrichtung nach Anspruch 8, 10 oder 13, **dadurch gekennzeichnet, dass** die Auflagezonen (430,440,430',720) aus drehbaren Elementen bestehen.

15. Vorrichtung (150,160) nach Anspruch 7, **dadurch gekennzeichnet, dass** das Stellglied mindestens einen Doppelzylinder (810,910) umfasst, wovon ein erster Kolben (840,940) mit der Leitschiene (210) zusammenwirkt und praktisch parallel zu ihrer Horizontalverlagerung (Th) ausgerichtet ist, wobei der zweite Kolben (820,920) zum Zusammenwirken mit dem Anschlag (850,950) bestimmt, und im Verhältnis zu dem ersten Kolben (840,940) praktisch senkrecht ausgerichtet ist.

16. Vorrichtung nach Anspruch 15, **dadurch gekennzeichnet, dass** der zweite Kolben (820,920) mit einem Rückholelement (830,930) verbunden ist.

17. Vorrichtung (160) nach Anspruch 15, **dadurch gekennzeichnet, dass** die Kammern (911,913) der Kolben (920,940) getrennt und mittels mindestens eines in der Schiene (310) untergebrachten Kanals (912) verbunden sind.

18. Vorrichtung (170,180) nach Anspruch 7, **dadurch gekennzeichnet, dass** das Stellglied mindestens ein drehbares Element (1010,1110) umfasst, welches auf der Schiene (310) mittels einer praktisch senkrecht zu der Horizontalverlagerung (Th) der Leitschiene (210) ausgerichteten Achse (1011,1111) angebracht, und in Form einer Translation in der Schiene (310) mittels Nuten (1021,1121) geführt ist, wobei das drehbare Element (1010,1110) zum Zusammenwirken mit zwei jeweils auf der Schiene (310) und der Leitschiene (210) vorgesehenen Rampen (1020,211;311,1120) vorgesehen ist, wobei mindestens eine der Rampen (1020,1120) geneigt ist.

19. Vorrichtung nach Anspruch 18, **dadurch gekennzeichnet, dass** das drehbare Element (1010,1110) mindestens drei koaxiale Zapfenrollen (1012,1013,1014;1112,1113,1114) mit unterschiedlichen Durchmessern umfasst, wovon mindestens zwei im Verhältnis zueinander beweglich sind, wobei die Zapfenrollen jeweils zum Zusammenwirken mit der Rampe (1020,311), die fest mit der Schiene (310) verbunden ist, mit der Rampe (211,1120), die fest mit der Leitschiene (210) verbunden ist, und mit dem Anschlag (1450,1150) angeordnet sind.

20. Vorrichtung nach Anspruch 1, **dadurch gekennzeichnet, dass** der Anschlag aus mindestens einer Einhängestange (450,650-1150), die zur Aufnahme des äußersten Vorderendes der Gabeln (10) vorgesehen ist, und aus einem Maschinentisch (20') ausgewählt wird, und mindestens eine mit dem Stellglied (410,410',610-1110) kompatible Form aufweist.

21. Handhabungsgerät mit Gabeln, zur Verlagerung einer Last (1) auf einer praktisch horizontalen Ebene zwischen dem Handhabungsgerät und einer Maschine (20), **dadurch gekennzeichnet, dass** seine Gabeln (10) die Kugellagervorrichtung (100-180) nach einem der vorangegangenen Patentansprüche umfassen.
